# EUROPEAN PATENT APPLICATION

(11) **EP 4 534 160 A1**
(43) Date of publication of application: **09.04.2025**
(21) Application number: 24150546.0
(22) Date of filing: 05.01.2024
(51) Int. Cl.: A63F 13/24, G05G 9/047, G06F 3/0338

(54) **RETRACTABLE/EXTENDABLE CONTROL STICK**

(30) Priority: 06.10.2023 US 202318482691
(71) Applicant: ACCO Brands Corporation, Lake Zurich, IL 60047 (US)
(72) Inventor: BIHELLER, Jason A., Lake Zurich, 60047 (US)
(74) Representative: Ström & Gulliksson AB

(57) **Abstract**

A video game system controller comprises a controller body and a controller control stick movably coupled to the controller body. The controller control stick has a handle (116; 1102). The controller control stick or the handle (116; 1102) is rotatable relative to the controller body and rotating the controller control stick or the handle (116; 1102) causes height of the handle (116; 1102) to change with respect to the controller body.

## Description

### FIELD

The present disclosure relates to a video game controller with an adjustable control stick that permits a user to raise and lower the height of the control stick.

### BACKGROUND

Video game controllers include one or more control stick components that include a stick that pivots on a base. A sensor mechanism in the base detects and reports angle and/or direction of the movement of the stick when a user engages a handle on the end of the stick. The handle on the stick has a default height with respect to the base that is selected during manufacture of the controller. However, it may be desirable to raise or lower the handle height for different games because different games play better with different handle heights. For instance, playing a first-person shooter game may be easier with a taller control stick than a default height shorter stick.

### SUMMARY

Most conventional video game controllers are limited to a fixed height for control sticks. Other conventional video game controllers require the user to replace handles or whole sticks in order to change the height of the control stick.

Conventionally, adjusting the height of a control stick involves removing the default control stick from the controller and attaching a new control stick to the controller with the desired height. However, having to remove and replace control sticks in the controller is a tedious, cumbersome process that requires the user to physically dismantle the controller to remove the current control stick and attach the desired control stick. Moreover, the conventional system requires the user to maintain and track a plurality of different control sticks of different heights.

The present application provides an adjustable control stick assembly that permits a user to adjust the height of the control stick. The adjustable control stick described herein allows a user to rotate the handle of the control stick to raise and lower the control stick. The user can rotate the handle in a first direction to raise the control stick and rotate the handle in a second direction opposite the first direction to lower the control stick. Thus, the same control stick can be used for different heights without requiring the user to dismantle the controller.

According to an aspect of the disclosure, a video game system controller control stick comprises a control stick shaft; and a control stick shell, wherein the control stick shaft is rotatably positioned in a notch of the control stick shell, wherein an end of the control stick shaft extends above the control stick shell, wherein the control stick shaft includes a protrusion and the control stick shell includes a plurality of indents engageable by the protrusion to position the end of the control stick shaft at different heights with respect to the control stick shell, wherein engagement of the protrusion and a first indent of the plurality of indents positions the end of the control stick shaft at a first height, wherein engagement of the protrusion and a second indent of the plurality of indents positions the end of the control stick shaft at a second height that is different from the first height, wherein the first indent and the second indent are positioned such that rotation of the control stick shaft when the protrusion engages the first indent causes the protrusion to move into engagement with the second indent.

According to an embodiment of any paragraph(s) of this summary, the control stick shaft is rotatable in a first direction to move the control stick shaft from engagement with the first indent to engagement with the second indent, wherein the control stick shaft is rotatable in a second direction to move the control stick shaft from engagement with the second indent to engagement with the first indent, wherein the second direction is opposite the first direction.

According to an embodiment of any paragraph(s) of this summary, engagement of the protrusion and a third indent of the plurality of indents positions the end of the control stick shaft at a third height, wherein the third height is different from the first height and the second height.

According to an embodiment of any paragraph(s) of this summary, the second height is larger than the first height, wherein the third height is larger than the second height.

According to an embodiment of any paragraph(s) of this summary, the second indent and the third indent are positioned such that rotation of the control stick shaft when the protrusion engages the second indent causes the protrusion to move into engagement with the third indent.

According to an embodiment of any paragraph(s) of this summary, the plurality of indents are formed on a surface that protrudes inwardly from the notch.

According to an embodiment of any paragraph(s) of this summary, the control stick shaft further includes an aperture shaped to receive a portion of the surface to not limit rotation of the control stick shaft.

According to an embodiment of any paragraph(s) of this summary, further comprises a biasing mechanism configured to bias the protrusion into engagement with each of the plurality of indents.

According to an embodiment of any paragraph(s) of this summary, the biasing mechanism comprises a compression spring.

According to an embodiment of any paragraph(s) of this summary, further comprises an attachment shaft configured to securely attach the control stick shaft to the control stick shell, wherein the control stick shaft has an annular cross-section configured to surround the attachment shaft, wherein the control stick shaft is configured to rotate around the attachment shaft.

According to an embodiment of any paragraph(s) of this summary, further includes a thumb pad fixedly attached to the end of the control stick shaft such that rotation of the thumb pad results in a corresponding rotation of the control stick shaft.

According to an embodiment of any paragraph(s) of this summary, the control stick shaft is rotatable in a first direction to move the control stick shaft from engagement with the first indent to engagement with the second indent, wherein the second indent is shaped to prevent further rotation in the first direction when the protrusion is engaged in the second indent.

According to another aspect of the disclosure, a video game system controller comprises a controller body; and a controller control stick movably coupled to the controller body, wherein the controller control stick is rotatable about a pivot center in the controller body, wherein the controller control stick includes: a control stick shaft; and a control stick shell, wherein the control stick shaft is rotatably positioned in a notch of the control stick shell, wherein an end of the control stick shaft extends above the control stick shell, wherein the control stick shaft includes a protrusion and the control stick shell includes a plurality of indents engageable by the protrusion to position the end of the control stick shaft at different heights with respect to the controller body, wherein a first indent and a second indent of the plurality of indents are positioned such that rotation of the control stick shaft when the protrusion engages the first indent causes the protrusion to move into engagement with the second indent.

According to an embodiment of any paragraph(s) of this summary, the control stick shell is coupled to the controller body to hold the control stick shell stationary while the control stick shaft rotates in the control stick shell.

According to an embodiment of any paragraph(s) of this summary, wherein the control stick shell is coupled to a control stick axis analog sensor module in the controller body, wherein the sensor module defines the pivot center.

According to an embodiment of any paragraph(s) of this summary, engagement of the protrusion and the first indent positions the end of the control stick shaft at a first height, wherein engagement of the protrusion and the second indent positions the end of the control stick shaft at a second height that is different from the first height.

According to an embodiment of any paragraph(s) of this summary, further comprises a second controller control stick movably coupled to the controller body, wherein the second controller control stick is rotatable above a second pivot center in the controller body.

According to another aspect of the disclosure, a video game system controller control stick comprises a control stick shaft; and a control stick shell, wherein the control stick shaft is rotatably positioned in a notch of the control stick shell, wherein an end of the control stick shaft extends above the control stick shell, wherein the control stick shaft includes a protrusion and the control stick shell includes a plurality of indents engageable by the protrusion to position the end of the control stick shaft at different heights with respect to the control stick shell, wherein engagement of the protrusion and a first indent of the plurality of indents positions the end of the control stick shaft at a first height, wherein engagement of the protrusion and a second indent of the plurality of indents positions the end of the control stick shaft at a second height that is different from the first height, wherein engagement of the protrusion and a third indent of the plurality of indents positions the end of the control stick shaft at a third height that is different from the first height and the second height, wherein the first indent and the second indent are positioned such that rotation of the control stick shaft in a first direction when the protrusion engages the first indent causes the protrusion to move into engagement with the second indent, wherein the second indent and the third indent are positioned such that rotation of the control stick shaft in the first direction when the protrusion engages the second indent causes the protrusion to move into engagement with the third indent, and wherein the third indent and the first indent are positioned such that rotation of the control stick shaft in the first direction when the protrusion engages the third indent causes the protrusion to move into engagement with the first indent.

According to an embodiment of any paragraph(s) of this summary, the video game system controller comprises a biasing mechanism configured to bias the control stick handle toward the first height or the second height to overcomably resist the rotation of the at least the portion in the first direction or a second direction.

According to an embodiment of any paragraph(s) of this summary, the second controller control stick includes: a second control stick shaft; and a second control stick shell, wherein the second control stick shaft is rotatably positioned in a second notch of the second control stick shell, wherein an end of the second control stick shaft extends above the control stick shell, wherein the second control stick shaft includes a second protrusion and the control stick shell includes a plurality of indents engageable by the second protrusion to position the end of the second control stick shaft at different heights with respect to the controller body, wherein a third indent and a fourth indent of the plurality of indents are positioned such that rotation of the second control stick shaft when the second protrusion engages the third indent causes the protrusion to move into engagement with the fourth indent.

To the accomplishment of the foregoing and related ends, the disclosure comprises the features hereinafter fully described and particularly pointed out in the claims. The following description and the annexed drawings set forth in detail certain illustrative embodiments of the disclosure. These embodiments are indicative, however, of but a few of the various ways in which the principles of the disclosure may be employed. Other objects, advantages and novel features of the disclosure will become apparent from the following detailed description when considered in conjunction with the drawings.

### BRIEF DESCRIPTION OF DRAWINGS

The annexed drawings, which are not necessarily to scale, show various aspects of the disclosure.
FIG. 1 is a view of a controller control stick assembly attached to a sensor module according to an embodiment of the disclosure.
FIG. 2 is a cross-sectional view of the control stick shell of FIG. 1 in isolation.
FIG. 3 is another view of the control stick shell of FIG. 1 in isolation.
FIG. 4 is a view of rotatable component of FIG. 1 in isolation.
FIG. 5 is a cross-sectional view of the controller control stick assembly of FIG. 1.
FIG. 6 is another view of the controller control stick assembly of FIG. 1.
FIGS. 7-9 illustrate a process of moving the controller control stick assembly of FIG. 1 about a rotational axis to move the control stick shaft between different heights according to an embodiment of the disclosure.
FIG. 10 illustrates a video game controller according to an embodiment of the disclosure.
FIG. 11 is an elevation a view of an example controller control stick assembly attached to a sensor module according to an embodiment of the disclosure.
FIG. 12A is a cross-sectional view of a second example control stick shell of FIG. 11 in isolation.
FIG. 12B is similar to FIG. 12A showing a cross-sectional view at a second location.
FIG. 12C is similar to FIG. 12A showing a cross-sectional view at a third location.
FIG. 13 is another cross-sectional view of the control stick shell of FIG. 11.
FIG. 14 is a view of rotatable component of FIG. 11 in isolation.
FIG. 15 is a cross-sectional view of a controller control stick assembly of FIG. 11.
FIG. 16 is another view of the controller control stick assembly of FIG. 11.
FIG. 17-19 illustrate a process of moving the controller control stick assembly of FIG. 15 about a rotational axis to move the control stick shaft between different heights according to an embodiment of the disclosure.

### DETAILED DESCRIPTION

Aspects of the present application that pertain to an adjustable controller control stick assembly are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details.

In reference to the disclosure herein, for purposes of convenience and clarity only, directional terms, such as, top, bottom, left, right, up, down, upper, lower, over, above, below, beneath, rear, and front, may be used. Such directional terms should not be construed to limit the scope of the features described herein in any manner. It is to be understood that embodiments presented herein are by way of example and not by way of limitation. The intent of the following detailed description, although discussing exemplary embodiments, is to be construed to cover all modifications, alternatives, and equivalents of the embodiments as may fall within the spirit and scope of the features described herein.

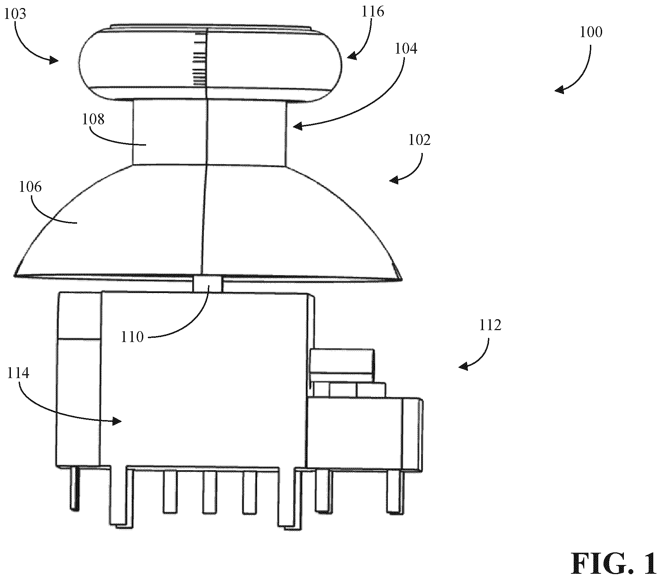

FIG. 1 illustrates a controller control stick assembly 100 for a video game system controller. In common video game controller parlance, the control stick may also be referred to as an analog stick or a thumbstick. Unlike conventional control sticks, the control stick assembly 100 allows a user to rotate a handle (e.g., handle 116) of the control stick assembly 100 to adjust a height of the handle with respect to the controller without having to remove and replace a current handle with a handle of another height. Accordingly, a user need not disassemble the controller and/or controller control stick assembly 100 to adjust the handle to a desired height. As seen in FIG. 1, control stick assembly 100 includes a control stick shell 102 and a rotatable component 103 movable with respect to the control stick shell 102. As will be described in detail below, rotatable component 103 includes a control stick shaft 104 movably retained within the control stick shell 102. The user can move (rotate) the control stick shaft 104 with respect to the control stick shell 102 to extend or retract the rotatable component 103.

The control stick shell 102 can take any suitable shape and/or size for movably retaining the control stick shaft 104. The illustrated control stick shell 102 includes a hemispherical portion 106 and a cylindrical portion 108 that extends from the hemispherical portion 106. Cylindrical portion 108 can be hollow to retain the control stick shaft 104 and have an open end to permit the control stick shaft 104 to extend outward from the cylindrical portion 108.

In addition to movably retaining the control stick shaft 104, the control stick shell 102 can be configured to attach the controller control stick assembly 100 to the controller. In the illustrated embodiment, control stick shell 102 is configured for attachment to a bar 110 of a control stick axis analog sensor module 112 that can be embedded within the controller. For purposes of explanation, the sensor module 112 illustrated in FIG. 1 is isolated from a controller. The bar 110 can be stiffly attached to a sensor 114 and/or, as illustrated, pivotably attached to the sensor 114 and the sensor 114 may be configured to detect pivoting of the bar 110. The sensor module 112 can be further configured to bias the bar 110 toward the neutral, vertical position illustrated in FIG. 1 and the sensor 114 may detect movement of the bar 110 against the bias. Accordingly, as the user pivots the attached control stick shell 102 about the pivot point of the bar 110, the sensor 112 detects the user-initiated movement of the control stick assembly 100.

The rotatable component 103 of the controller control stick assembly 100 can further include a handle 116 at an end of the control stick shaft 104 to increase ease of use of the control stick assembly 100. The handle 116 can take any suitable shape, size, and/or configuration for increasing ease of use and different configurations can be used for different control sticks. For instance, where the control stick assembly 100 is meant for use by multiple fingers, the handle 116 can be spherical or shaped for engagement by multiple fingers. In the illustrated embodiment, handle 116 is a thumb pad that is torus-shaped with a central portion shaped to accommodate the end of the control stick shaft 104.

As mentioned above, control stick shaft 104 is configured to move in the cylindrical portion 108 of the control stick shell 102 to extend and retract the handle 116. Any suitable movement can be used to raise and/or lower the handle 116. In the embodiments illustrated herein, the control stick shell 102 and the control stick shaft 104 are configured such that control stick shaft 104 rotates in a first direction to extend the control stick shaft 104 out of the cylindrical portion 108 and the control stick shaft 104 rotates in a second direction opposite the first direction to retract the control stick shaft 104 into the cylindrical portion 108.

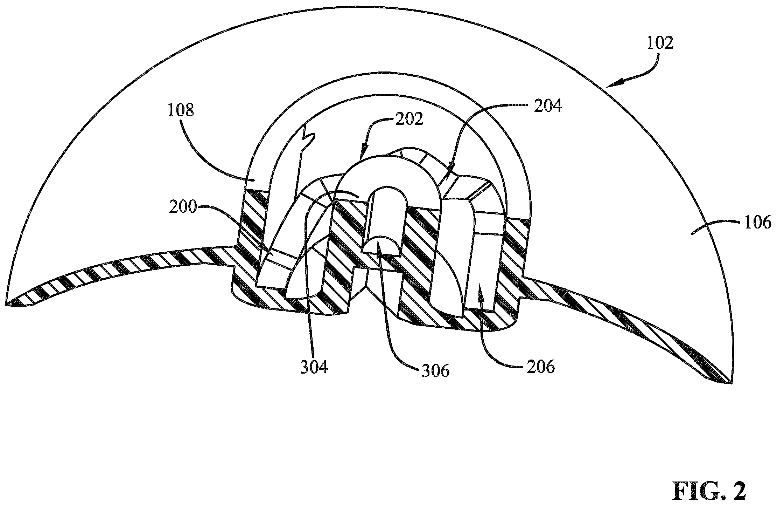

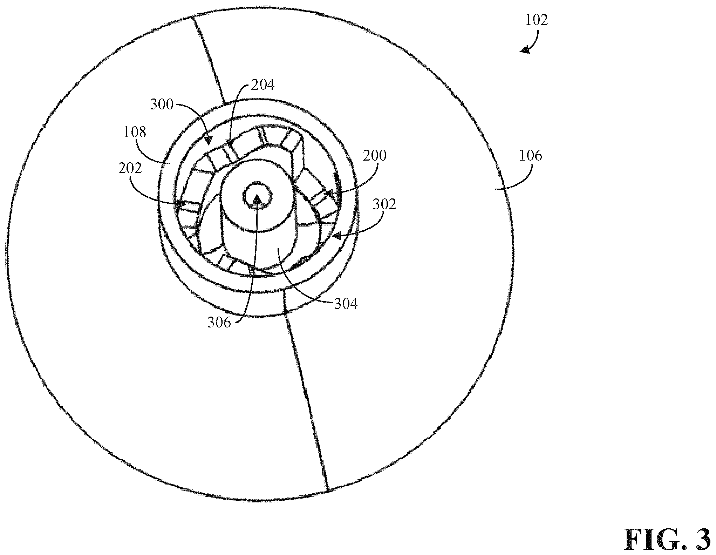

As seen in FIGS. 2 and 3, to hold the handle 116 at a selected height, the control stick shell 102 includes a plurality of indents and a corresponding structure on the control stick shaft 104 that engages one of the plurality of indents to hold the control stick shaft 104 at a selected indent. The control stick shell 102 can include any suitable number of indents and, in the embodiment illustrated in FIG. 2, the control stick shell 102 includes three indents. More particularly, the control stick shell 102 includes a first indent 200, a second indent 202, and a third indent 204 (hereafter referred to "indents 200-204") that each corresponds to a different height for the handle 116. Specifically, the first indent 200 corresponds to the most retracted height of the handle 116, the third indent 204 corresponds to the most extended height of the handle 116, and the second indent 202 corresponds to an intermediate height of the handle 116 between the most retracted height and the most extended height. Because the indents 200-204 hold the handle 116 at different heights, the indents 200-204 can further define a selectable range of height options the user can select by rotating the control stick shaft 104.

The indents 200-204 can have any suitable design and/or arrangement in the control stick shell 102. In the illustrated embodiment, an inner surface of the cylindrical portion 108 includes a protrusion 206 that extends into the opening defined by the cylindrical portion 108. Protrusion 206 includes an arcuate upper surface that defines a travel path the control stick shaft 104 follows as the control stick shaft 104 rotates. As seen in FIG. 2, the indents 200-204 are formed at different locations along the travel path. By positioning the indents 200-204 along the travel path engaged by the control stick shaft 104, the control stick assembly 100 permits a user to simply rotate the control stick shaft 104 to move between different heights.

The view of the control stick shell 102 in FIG. 2 illustrates one travel path on protrusion 206. However, the control stick shell 102 may include a plurality of travel paths arranged to engage and/or support different portions of the control stick shaft 104 during rotation. The plurality of travel paths can each be formed on separate protrusions and/or may share protrusions. Each travel path may include a similar number of indents and/or the configurations may vary. In the embodiment illustrated in FIG. 3, the control stick shell 102 includes two travel paths 300 and 302 that are formed on the same protrusion 206 and have similar configurations. Specifically, the travel paths 300 and 302 each includes three indents, e.g., indents 200-204. To equally support the control stick shaft 104 during rotation, the indents 200-204 of each travel path are diametrically opposed within the cylindrical portion 108. For instance, the third indent 204 of the first travel path 300 that corresponds to the most extended height is diametrically opposite the third indent 204 of the second travel path 302 that similarly corresponds to the most extended height.

As can be seen in FIG. 3, the control stick shell 102 further includes an attachment protrusion 304 that extends longitudinally in the center of the cylindrical portion 108. The attachment protrusion 304 can be configured as the location where the control stick shaft 104 is rotationally attached to the control stick shell 102. As seen in FIG. 3, the attachment protrusion 304 includes a notch 306 configured to receive a corresponding attachment structure to rotationally secure the control stick shaft 104 to the control stick shell 102.

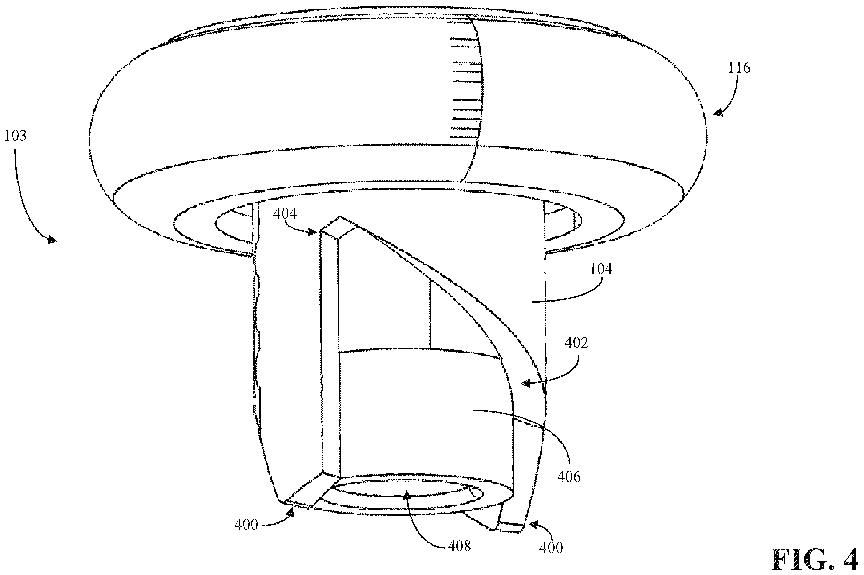

Turning now to FIG. 4, the rotatable component 103 is illustrated in isolation. As noted above, control stick shaft 104 is configured to releasably engage the indents 200-204 of the control stick shell 102. In the illustrated embodiment, the control stick shaft 104 includes protrusions 400 shaped to releasably engage the indents 200-204. The control stick shaft 104 can include any suitable number of protrusions 400 and the number may depend on the configuration of the travel path(s) in the control stick shell 102. In the illustrated embodiment, the control stick shaft 104 includes two protrusions 400 with one each to travel along the respective travel paths 300 and 302 and engage the corresponding indents 200-204 of each respective travel path 300 and 302.

To prevent other parts of the control stick shaft 104 from unintentionally engaging the control stick shell 102 and hindering rotation of the control stick shaft 104 between the indents 200-204, the control stick shaft 104 further includes apertures or cut-out sections 402 positioned adjacent the protrusions 400 and shaped to accommodate the arcuate travel path portions of the protrusion 206. Additionally, the apertures 402 can further be shaped to engage the protrusion 206 to prevent rotation outside of a pre-defined rotation range. As illustrated in FIG. 4, the edge 404 of aperture 402 is shaped to engage the protrusion 206 when the protrusion 400 on the control stick shaft 104 engages the first indent 200 to prevent further retraction into the control stick shell 102.

The rotatable component 103 further includes a support rod 406 that is rotatably connected to the attachment protrusion 304. The support rod 406 includes an opening 408 at one end shaped to permit insertion of the attachment protrusion 304 into the support rod 406. As seen in FIG. 4, the control stick shaft 104 and the support rod 406 are arranged concentrically with the control stick shaft 104 extending around the support rod 406.

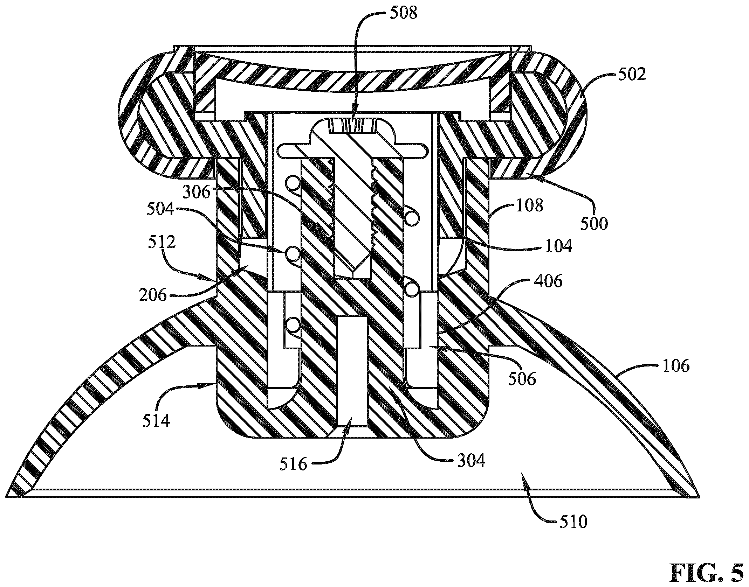

Turning now to FIG. 5, illustrated is a cross-sectional view of the rotatable component 103 attached to the control stick shell 102 with the control stick shaft 104 at the most retracted height. In the attached arrangement, the attachment protrusion 304 within the cylindrical portion 108 extends into the support rod 406 of the rotatable component 103. Accordingly, as seen in FIG. 5, the control stick shaft 104 and the support rod 406 are sandwiched between the attachment protrusion 304 and a wall of the cylindrical portion 108.

The illustrated control stick shaft 104 further includes an outwardly extending protrusion 500 that with a pad cover 502 forms the handle 116. Because the protrusions 400 of the control stick shaft 104 are used to hold the handle 116 at a selected height, the control stick shaft 104 is made of a stiff material (e.g., a thermoplastic polymer) that may be uncomfortable for long term engagement by the user or slippery and thus the pad cover 502 made of a softer more gripping material (e.g., rubber) is applied over the protrusion 500 to provide a softer and non-slip surface for user engagement. As seen in the illustrated embodiment, pad cover 502 is shaped to leave a portion of the lower side of the protrusion 500 exposed to engage the cylindrical portion 108 in the most retracted position.

To ensure that the protrusions 400 on the control stick shaft 104 continuously engage their respective travel paths 300 and 302, the controller control stick assembly 100 may further include a biasing mechanism 504 which biases the control stick shaft 104 downward (i.e., contracted) toward the travel paths 300 and 302. In the illustrated embodiment, the biasing mechanism 504 is a biasing compression spring 504 with a first end of the spring 504 engaging an inward extending surface 506 of the support rod 406 and a second end that engages a screw 508 threaded into the notch 306 of the attachment portion 304. By securing one end of the spring to the fixed control stick shell 102, via the screw 508, the spring 504 is compressed as the attachment protrusion 304 travels along the travel path during rotation of the control stick shaft 104. Accordingly, the spring 504 presses the protrusions 400 of the control stick shaft 104 downward to engage the protrusion 206 of the control stick shell 102. The control stick shaft 104 and/or the control stick handle 116 is rotatable about a pivot center and rotation in a first direction coerces the control stick handle 116 to a first height relative to the hemispherical portion 106 or the controller body and rotation in a second direction, different from the first direction, coerces the control stick handle 116 to a second height relative to the hemispherical portion 106 or the controller body. The biasing mechanism 504 biases the control stick handle 116 toward the first height or the second height to overcomably resist the rotation in the first direction or the second direction. Although in this embodiment a spring is used as the biasing mechanism 504, any suitable biasing mechanism may be used such as elastomerics, compressible gasses, or other compressible and resilient materials.

As seen in FIG. 5, the hemispherical portion 106 of the control stick shell 102 is hollow and defines a curved recess 510 and the cylindrical portion 108 extends from opposing sides of the hemispherical portion 106. Specifically, a first section 512 of the cylindrical portion 108 extends from a top side of the hemispherical portion 106 and a second section 514 of the cylindrical portion 108 extends from a bottom side of the hemispherical portion 106. The second section 514 of the cylindrical portion 108 includes an attachment notch 516 shaped for attaching the control stick assembly 100 to the bar 110 of the sensor module 112.

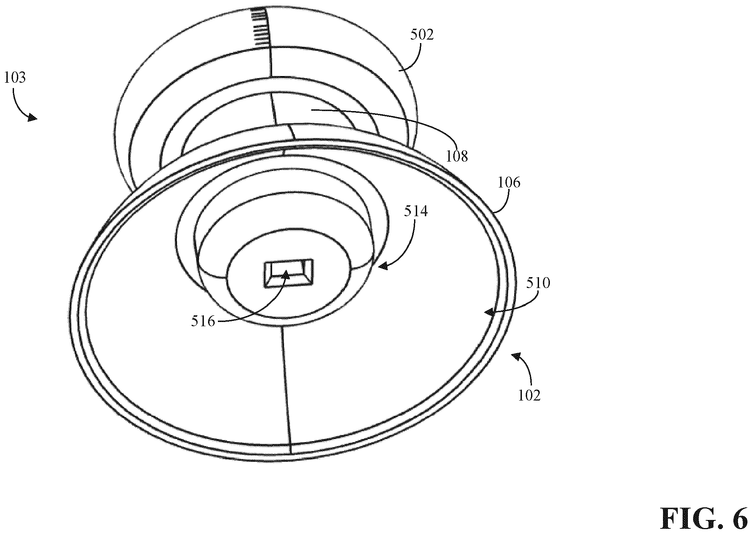

The bar 110 and/or the attachment notch 516 may be shaped to hold the control stick shell 102 in place when attached to a video game controller while the user rotates the rotatable component 103. Turning now to FIG. 6, illustrated is an embodiment where the attachment notch 516 has a non-circular cross-sectional shape to prevent the control stick shell 102 from rotating about the bar 110. In the illustrated embodiment, the attachment notch 516 has a rectangular cross-sectional shape, but other non-circular shapes are imaginable, such as triangular, polygonal, oval, and/or the like. Similarly, the bar 110 may also have a non-circular cross-sectional shape, such as rectangular and/or the like. The cross-sectional shape of the bar 110 and the attachment notch 516 may be similar and/or can vary.

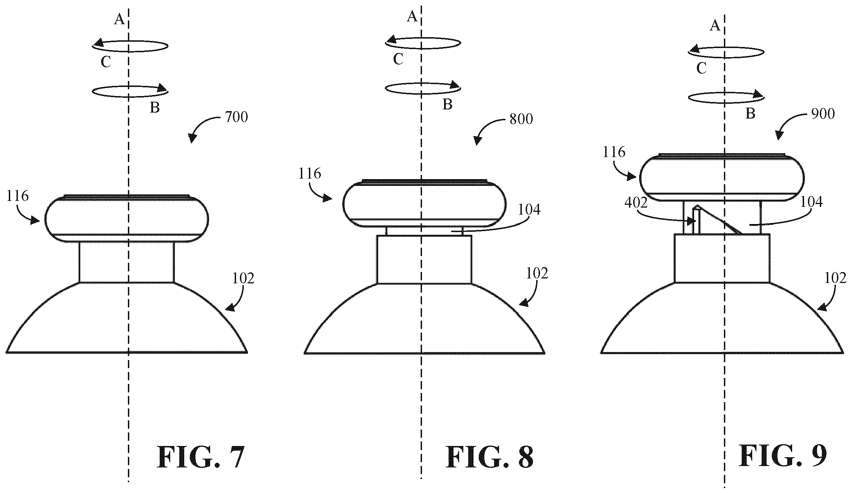

Turning now to FIGS. 7-9, illustrated is the control stick assembly 100 moving between the most retracted position 700 (FIG. 7) and the most extended position 900 (FIG. 9). As seen in FIG. 7, in the most retracted position 700 that corresponds to the first indent 200, the handle 116 is held at the closest position to the control stick shell 102. The user can then rotate the handle 116 about axis A in direction B to move the handle 116 from the most retracted position 700 to the intermediate position 800 (FIG. 8). As seen in FIG. 8, handle 116 is spaced from the control stick shell 102 in the intermediate position 800 and the handle 116 is held in the intermediate position 800 by the second indent 202. The user can then rotate the handle 116 about axis A in direction B again to move the handle 116 from the intermediate position 800 (FIG. 8) to the most extended position 900 (FIG. 9). As seen in FIG. 9, handle 116 is yet further spaced from the control stick shell 102 in the most extended position 900 to the point that a portion of the aperture 402 of the control stick shaft 104 is exposed. Conversely, to lower the handle 116 from the most extended position 900 and/or the intermediate position 800, the user can rotate the handle 116 about axis A in direction C which is opposite direction B.

By using the angled travel path (e.g., travel path 300) with multiple indents that is continuously engaged by the control stick shaft 104, the user need only rotate the control stick shaft 104 (e.g., via the handle 116) to adjust the height of the handle 116. Accordingly, the user does not need to remove a current handle and replace the handle with a new handle with a different height or pull the handle upward while twisting the handle to engage a lock to hold the handle at the upward height.

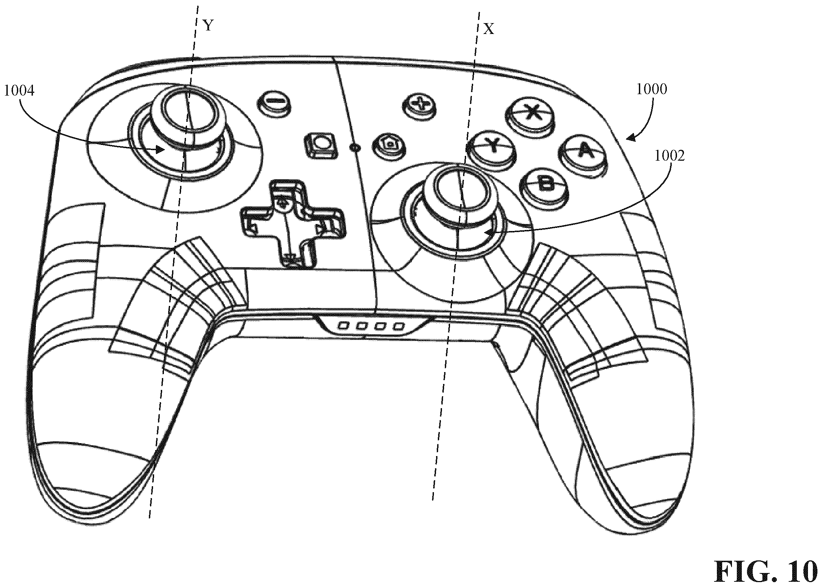

Turning now to FIG. 10, illustrated is a video game controller 1000 that includes a first control stick 1002 and a second control stick 904 that are attached thereto. In one embodiment, both the first control stick 1002 and the second control stick 1004 are independently adjustable to raise and lower the associated handle, similar to the control stick assembly 100 described above. In the illustrated embodiment, the first control stick 1002 is rotatable about a first axis X and the second control stick 1004 is rotatable about a second axis Y. The first axis X and the second axis Y can be parallel, as illustrated, and/or at an angle to each other. Thus, the first control stick 1002 can be raised to the most extended position 900 (FIG. 9) while the second control stick 904 is raised to the intermediate position 800 (FIG. 8). In another embodiment, only one control stick is adjustable (e.g., the first control stick 1002) while the other control stick is fixed (e.g., the second control stick 1004).

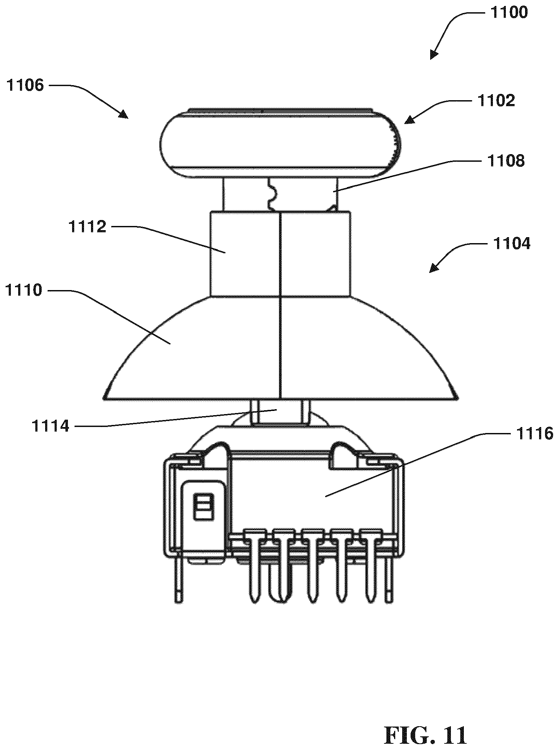

FIG. 11 illustrates an example controller control stick assembly 1100 for a video game system controller similar to the example controller control stick assembly 100 of FIG. 1. As with previously described examples, the controller control stick assembly 1100 allows a user to rotate a handle 1102 of the control stick assembly 1100 to adjust a height of the handle 1102 with respect to the controller without having to remove and replace a current handle with a handle of another height. Accordingly, a user need not disassemble the controller and/or controller control stick assembly 1100 to adjust the handle to a desired height. As seen in FIG. 11, controller control stick assembly 1100 includes a control stick shell 1104 and a rotatable component 1106 movable with respect to the control stick shell 1104. As will be described in detail below, the rotatable component 1106 includes a control stick shaft 1108 movably retained within the control stick shell 1104. The user can move (rotate) the control stick shaft 1108 with respect to the control stick shell 1104 to extend or retract the rotatable component 1106.

The control stick shell 1104 can take any suitable shape and/or size for movably retaining the control stick shaft 1108. The illustrated control stick shell 1104 includes a hemispherical portion 1110 and a cylindrical portion 1112 that extends from the hemispherical portion 1110. Cylindrical portion 1112 can be hollow to retain the control stick shaft 1108 and have an open end to permit the control stick shaft 1108 to extend outward from the cylindrical portion 1112.

In addition to movably retaining the control stick shaft 1108, the control stick shell 1104 can be configured to attach the controller control stick assembly 1100 to the controller. In the illustrated embodiment, control stick shell 1104 is configured for attachment to a bar 1114 of a control stick axis analog sensor module 1116 that can be embedded within the controller. For purposes of explanation, the sensor module 1116 illustrated in FIG. 11 is isolated from a controller. The bar 1114 can be stiffly attached to a sensor 1116 and/or, as illustrated, pivotably attached to the sensor 1116 and the sensor 1116 may be configured to detect pivoting of the bar 1114. The sensor module 1116 can be further configured to bias the bar 1114 toward the neutral, vertical position illustrated in FIG. 11 and the sensor 1116 may detect movement of the bar 1114 against the bias. Accordingly, as the user pivots the attached control stick shell 1104 about the pivot point of the bar 1114, the sensor 1116 detects the user-initiated movement of the control stick assembly 1100.

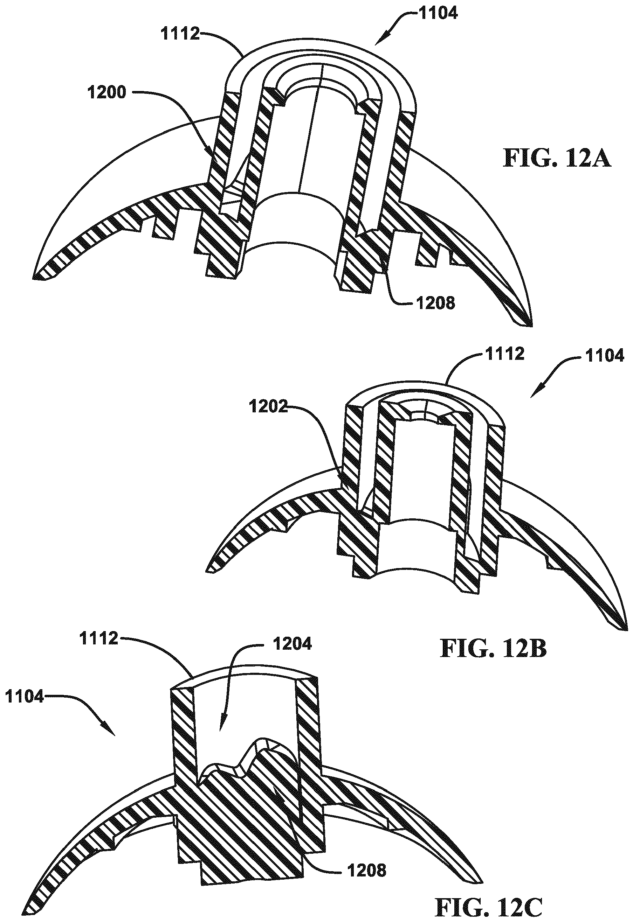

As seen in FIGS. 12A, 12B, and 12C, to hold the handle 1102 (not shown in FIGS. 12A-12C) at a selected height, an example control stick shell 1104 includes a plurality of indents and a corresponding structure on the control stick shaft that engages one of the plurality of indents to hold the control stick shaft at a selected indent. The control stick shell 1104 can include any suitable number of indents and, in the embodiment illustrated in FIGS. 12A-12C, the control stick shell 1104 includes three indents. More particularly, the control stick shell 1104 includes a first indent 1200 shown in FIG. 12A, a second indent 1202 shown in FIG. 12B, and a third indent 1204 shown in FIG. 12C (hereafter referred to "indents 1200-1204") that each corresponds to a different height for the handle 1102. Specifically, the first indent 1200 corresponds to the most retracted height of the handle 1102, the third indent 1204 corresponds to the most extended height of the handle 1102, and the second indent 1202 corresponds to an intermediate height of the handle 1102 between the most retracted height and the most extended height. Because the indents 1200-1204 hold the handle 1102 at different heights, the indents 1200-1204 can further define a selectable range of height options the user can select by rotating the control stick shaft 1108.

The indents 1200-1204 can have any suitable design and/or arrangement in the control stick shell 1104. In the illustrated embodiment, an inner surface of a cylindrical portion 1112 includes a protrusion 1208 that extends into the opening defined by the cylindrical portion 1112. The protrusion 1208 includes an arcuate upper surface that defines a travel path which the control stick shaft 1108 follows as the control stick shaft 1108 rotates. As seen in FIGS. 12A-12C, the indents 1200-1204 are formed at different locations along the travel path. By positioning the indents 1200-1204 along the travel path engaged by the control stick shaft 1108, the control stick assembly 1100 permits a user to simply rotate the control stick shaft 1108 to move the handle 1102 between different heights.

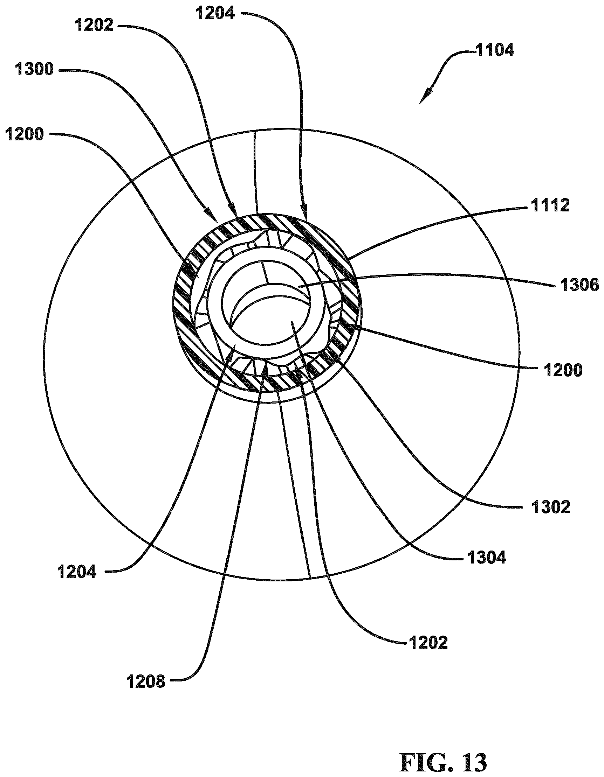

The view of the control stick shell 1104 in FIGS. 12A-12C illustrates one travel path on protrusion 1208. However, the control stick shell 1104 may include a plurality of travel paths arranged to engage and/or support different portions of the control stick shaft 1108 during rotation. The plurality of travel paths can each be formed on separate protrusions and/or may share protrusions. Each travel path may include a similar number of indents and/or the configurations may vary. In the embodiment illustrated in FIG. 13, the control stick shell 1104 includes two travel paths 1300 and 1302 that are formed on the same protrusion 1208 and have similar configurations. Specifically, the travel paths 1300 and 1302 each include three indents, e.g., indents 1200-1204. To equally support the control stick shaft 1108 during rotation, the indents 1200-1204 of each travel path are diametrically opposed within the cylindrical portion 1112. For instance, the third indent 1204 of the first travel path 1300 that corresponds to the most extended height is diametrically opposite the third indent 1204 of the second travel path 1302 that similarly corresponds to the most extended height.

As can be seen in FIG. 13, the control stick shell 1104 further includes an attachment protrusion 1304 that extends longitudinally in the center of the cylindrical portion 1112. The attachment protrusion 1304 can be configured as the location where the control stick shaft 1108 is rotationally attached to the control stick shell 1104. As seen in FIG. 13, the attachment protrusion 1304 includes a notch 1306 configured to receive a corresponding attachment structure to rotationally secure the control stick shaft 1108 to the control stick shell 1104.

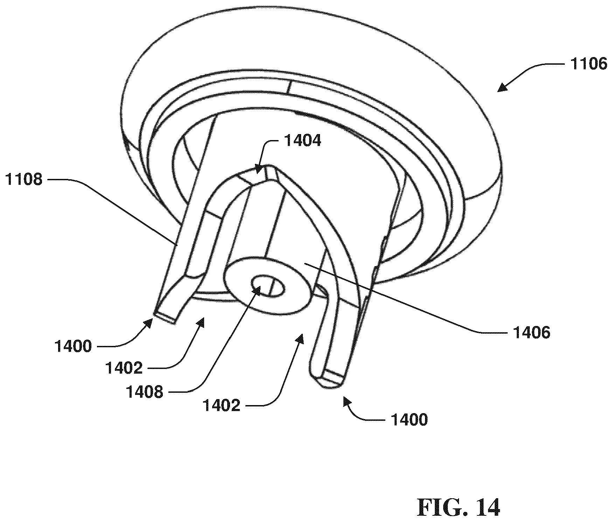

Turning now to FIG. 14, the rotatable component 1106 is illustrated in isolation. As noted above, control stick shaft 1108 is configured to releasably engage the indents 1200-1204 of the control stick shell 1104 (shown in FIGS. 12A-12C). In the illustrated embodiment, the control stick shaft 1108 includes protrusions 1400 shaped to releasably engage the indents 1200-1204. The control stick shaft 1108 can include any suitable number of protrusions 1400 and the number may depend on the configuration of the travel path(s) in the control stick shell 1104. In the illustrated embodiment, the control stick shaft 1108 includes two protrusions 1400 with one each to travel along the respective travel paths 1300 and 1302 and engage the corresponding indents 1200-1204 of each respective travel path 1300 and 1302.

To prevent other parts of the control stick shaft 1108 from unintentionally engaging the control stick shell 1104 and hindering rotation of the control stick shaft 1108 between the indents 1200-1204, the control stick shaft 1108 further includes apertures or cut-out sections 1402 positioned adjacent the protrusions 1400 and shaped to accommodate the arcuate travel path portions of the protrusion 1208. Additionally, the apertures 1402 can further be shaped to engage or not engage the protrusion 1208 to enable rotation through a 360-degree rotation range. As illustrated in FIG. 14, the edge 1404 of aperture 1402 is shaped to engage the protrusion 1208 when the protrusion 1400 on the control stick shaft 1108 engages the first indent 1200 to prevent further retraction into the control stick shell 1104.

The rotatable component 1106 further includes a support rod 1406 that is rotatably connected to the attachment protrusion 1304. The support rod 1406 includes an opening 1408 at one end shaped to permit insertion of the support rod 1406 into the attachment protrusion 1304. As seen in FIG. 14, the control stick shaft 1108 and the support rod 1406 are arranged concentrically with the control stick shaft 1108 extending around the attachment protrusion 1304.

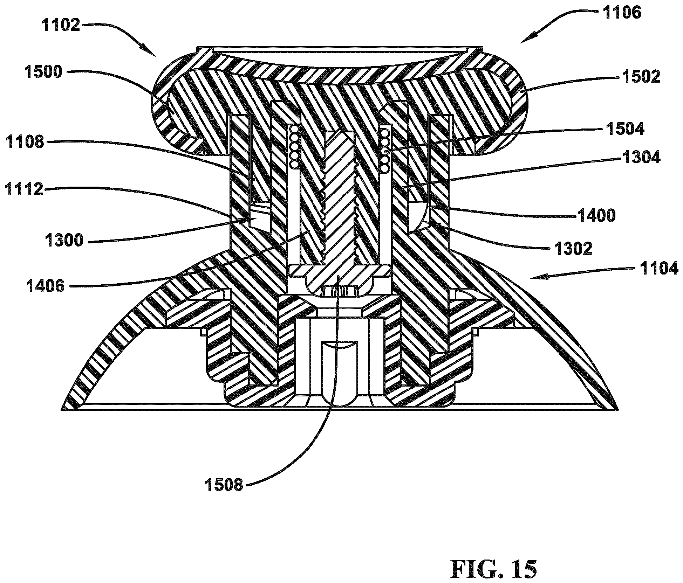

Turning now to FIG. 15, illustrated is a cross-sectional view of the rotatable component 1106 attached to the control stick shell 1104 with the control stick shaft 1108 at the most retracted height. In the attached arrangement, the attachment protrusion 1304 within the cylindrical portion 1112 extends around the support rod 1406 of the rotatable component 1106. Accordingly, as seen in FIG. 15, the attachment protrusion 1304 and the control stick shaft 1108 are sandwiched between the support rod 1406 and a wall of the cylindrical portion 1112.

The illustrated control stick shaft 1108 further includes an outwardly extending protrusion 1500 that with a pad cover 1502 forms the handle 1102. Because the protrusions 1400 of the control stick shaft 1108 are used to hold the handle 1102 at a selected height, the control stick shaft 1108 is made of a stiff material (e.g., a thermoplastic polymer) that may be uncomfortable for long term engagement by the user or slippery and thus the pad cover 1502 made of a softer more gripping material (e.g., rubber) is applied over the protrusion 1500 to provide a softer and non-slip surface for user engagement. As seen in the illustrated embodiment, pad cover 1502 is shaped to leave a portion of the lower side of the protrusion 1500 exposed to engage the cylindrical portion 1112 in the most retracted position.

To ensure that the protrusions 1400 on the control stick shaft 1108 continuously engage their respective travel paths 1300 and 1302, the controller control stick assembly 1100 may further include a biasing mechanism 1504 which biases the control stick shaft 1108 downward (i.e., contracted) toward the travel paths 1300 and 1302. In the illustrated embodiment, the biasing mechanism 1504 is a biasing compression spring 1504 with a first end of the spring 1504 engaging a first surface and a second end that engages an opposing surface of a screw 1508 threaded into the opening 1408 of the support rod 1406. FIG. 15 shows the spring 1504 compressed fully, however, the lower end of the spring 1504 is understood to contact the upward facing side of the screw head of screw 1508. By securing one end of the spring 1504 to the fixed control stick shell 1104, via the screw 1508, the spring 1504 is compressed as the protrusion 1400 travels along the travel paths 1300, 1302 during rotation of the control stick shaft 1108. Accordingly, the spring 1504 presses the protrusions 1400 of the control stick shaft 1108 downward to engage the protrusion 1208 of the control stick shell 1104. The control stick shaft 1108 and/or the control stick handle 1102 is rotatable about a pivot center and rotation in a first direction coerces the control stick handle 1102 to a first height relative to the hemispherical portion 1110 or the controller body and rotation in a second direction, different from the first direction, coerces the control stick handle 1102 to a second height relative to the hemispherical portion 1110 or the controller body. The biasing mechanism 1504 biases the control stick handle 1102 toward the first height or the second height to overcomably resist the rotation in the first direction or the second direction. Although in this embodiment a spring is used as the biasing mechanism 1504, any suitable biasing mechanism may be used such as elastomerics, compressible gasses, or other compressible and resilient materials.

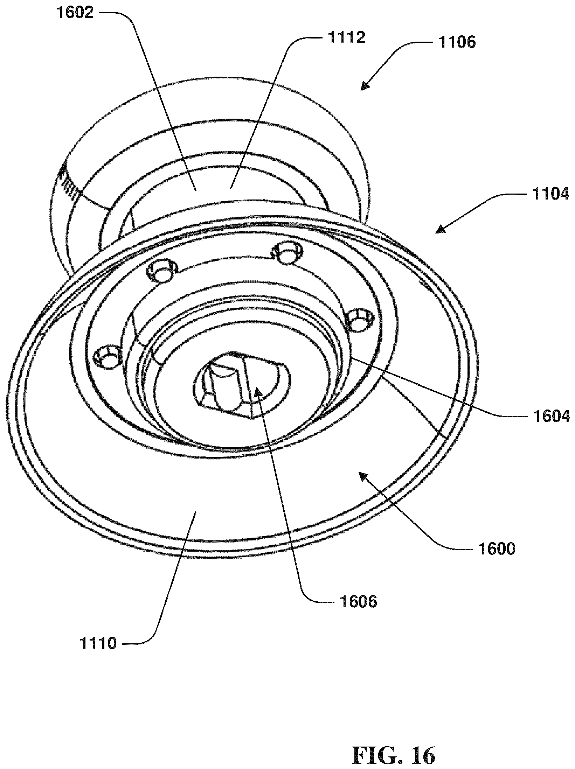

As seen in FIG. 16, the hemispherical portion 1110 of the control stick shell 1104 is hollow and defines a curved recess 1600 and the cylindrical portion 1112 extends from opposing sides of the hemispherical portion 1110. Specifically, a first section 1602 of the cylindrical portion 1112 extends from a top side of the hemispherical portion 1110 and a second section 1604 of the cylindrical portion 1112 extends from a bottom side of the hemispherical portion 1110. The second section 1604 of the cylindrical portion 1112 includes an attachment notch 1606 shaped for attaching the control stick assembly 1100 to the bar 1114 of the sensor module 1116 (shown in FIG. 11).

The bar 1114 and/or the attachment notch 1606 may be shaped to hold the control stick shell 1104 in place when attached to a video game controller while the user rotates the rotatable component 1106. As shown in FIG. 16, the attachment notch 1606 has a non-circular cross-sectional shape to prevent the control stick shell 1104 from rotating about the bar 1114. In the illustrated embodiment, the attachment notch 1606 has a rectangular cross-sectional shape with slightly curved shorter sides, but other non-circular shapes are imaginable, such as triangular, polygonal, oval, and/or the like. Similarly, the bar 1114 may also have a non-circular cross-sectional shape, such as rectangular and/or the like. The cross-sectional shape of the bar 1114 and the attachment notch 1606 may be similar and/or can vary.

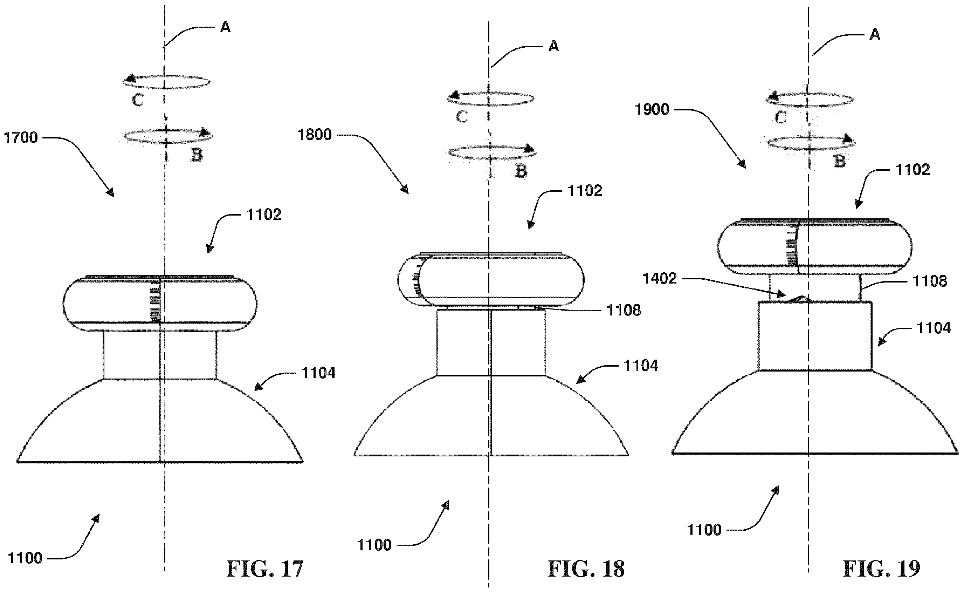

Turning now to FIGS. 17-19, illustrated is the control stick assembly 1100 moving between the most retracted position 1700 (FIG. 17) and the most extended position 1900 (FIG. 19). As seen in FIG. 17, in the most retracted position 1700 that corresponds to the first indent 1200, the handle 1102 is held at the closest position to the control stick shell 1104. The user can then rotate the handle 1102 about axis A in direction B to move the handle 1102 from the most retracted position 1700 to the intermediate position 1800 (FIG. 18). As seen in FIG. 18, handle 1102 is spaced from the control stick shell 1104 in the intermediate position 1800 and the handle 1102 is held in the intermediate position 1800 by the second indent 1202. The user can then rotate the handle 1102 about axis A in direction B again to move the handle 1102 from the intermediate position 1800 (FIG. 18) to the most extended position 1900 (FIG. 19). As seen in FIG. 19, handle 1102 is yet farther spaced from the control stick shell 1104 in the most extended position 1900 to the point that a portion of the aperture 1402 of the control stick shaft 1108 is exposed. Conversely, to lower the handle 1102 from the most extended position 1900 and/or the intermediate position 1800, the user can rotate the handle 1102 about axis A in direction C which is opposite direction B.

However, as discussed previously, the protrusions 1400 can be shaped to accommodate the arcuate travel path portions of the protrusion 1208 without a physical interference or hard stop after attaining the most extended position 1900 (FIG. 19). In other words, this example of the controller control stick assembly 1100 enables the user to rotate the handle 1102 through a full, 360-degree rotation. The protrusions 1400 are configured with the protrusion 1208 and the respective paths 1300, 1302 to enable rotation of the handle 1102 in direction B past the most extended position 1900 (FIG. 19). Continued rotation in direction B is not met by a hard stop, but, instead, moves the handle 1102 from the most extended position 1900 (FIG. 19) directly to the most retracted position 1700 (FIG. 17). As such, the handle 1102 can be rotated from the most extended position 1900 (FIG. 19) in the direction B to the most retracted position 1700 (FIG. 17) without passing through the intermediate position 1800 (FIG. 18). As described, the 360-degree rotation can enable faster movement of the handle 1102 from the most extended position 1900 (FIG. 19) to the most retracted position 1700 (FIG. 17) and can also reduce the likelihood of unintentional wear and tear by forcing the handle 1102 against a hard stop.

By using the angled travel path (e.g., travel path 1300) with multiple indents that is continuously engaged by the control stick shaft 1108, the user need only rotate the control stick shaft 1108 (e.g., via the handle 1102) to adjust the height of the handle 1102. Accordingly, the user does not need to remove a current handle and replace the handle with a new handle with a different height or pull the handle upward while twisting the handle to engage a lock to hold the handle at the upward height.

### DEFINITIONS

The following includes definitions of selected terms employed herein. The definitions include various examples or forms of components that fall within the scope of a term and that may be used for implementation. The examples are not intended to be limiting. Both singular and plural forms of terms may be within the definitions.

An "operable connection," or a connection by which entities are "operably connected," is one in which signals, physical communications, or logical communications may be sent or received. Typically, an operable connection includes a physical interface, an electrical interface, or a data interface, but it is to be noted that an operable connection may include differing combinations of these or other types of connections sufficient to allow operable control. For example, two entities can be operably connected by being able to communicate signals to each other directly or through one or more intermediate entities like a processor, operating system, a logic, software, or other entity. Logical or physical communication channels can be used to create an operable connection.

To the extent that the term "includes" or "including" is employed in the detailed description or the claims, it is intended to be inclusive in a manner similar to the term "comprising" as that term is interpreted when employed as a transitional word in a claim. Furthermore, to the extent that the term "or" is employed in the detailed description or claims (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995).

While example systems, methods, and so on, have been illustrated by describing examples, and while the examples have been described in considerable detail, it is not the intention of the applicants to restrict or in any way limit scope to such detail. It is, of course, not possible to describe every conceivable combination of components or methodologies for purposes of describing the systems, methods, and so on, described herein. Additional advantages and modifications will readily appear to those skilled in the art. Therefore, the invention is not limited to the specific details, the representative apparatus, and illustrative examples shown and described. Thus, this application is intended to embrace alterations, modifications, and variations that fall within the scope of the appended claims. Furthermore, the preceding description is not meant to limit the scope of the invention. Rather, the scope of the invention is to be determined by the appended claims and their equivalents.

### ALTERNATIVE ASPECTS

Further alternative aspects of the present disclosure are described in the following numbered clauses.

Clause 1: A video game system controller control stick comprising: a control stick shaft; and a control stick shell, wherein the control stick shaft is rotatably positioned in a notch of the control stick shell, wherein an end of the control stick shaft extends above the control stick shell, wherein the control stick shaft includes a protrusion and the control stick shell includes a plurality of indents engageable by the protrusion to position the end of the control stick shaft at different heights with respect to the control stick shell, wherein engagement of the protrusion and a first indent of the plurality of indents positions the end of the control stick shaft at a first height, wherein engagement of the protrusion and a second indent of the plurality of indents positions the end of the control stick shaft at a second height that is different from the first height, wherein the first indent and the second indent are positioned such that rotation of the control stick shaft when the protrusion engages the first indent causes the protrusion to move into engagement with the second indent.

Clause 2: The controller control stick of clause 1, wherein the control stick shaft is rotatable in a first direction to move the control stick shaft from engagement with the first indent to engagement with the second indent, wherein the control stick shaft is rotatable in a second direction to move the control stick shaft from engagement with the second indent to engagement with the first indent, wherein the second direction is opposite the first direction.

Clause 3: The controller control stick of clause 1, wherein engagement of the protrusion and a third indent of the plurality of indents positions the end of the control stick shaft at a third height, wherein the third height is different from the first height and the second height.

Clause 4: The controller control stick of clause 3, wherein the second height is larger than the first height, wherein the third height is larger than the second height.

Clause 5: The controller control stick of clause 3, wherein the second indent and the third indent are positioned such that rotation of the control stick shaft when the protrusion engages the second indent causes the protrusion to move into engagement with the third indent.

Clause 6: The controller control stick of clause 1, wherein the plurality of indents are formed on a surface that protrudes inwardly from the notch.

Clause 7: The controller control stick of clause 6, wherein the control stick shaft further includes an aperture shaped to receive a portion of the surface to not limit rotation of the control stick shaft.

Clause 8: The controller control stick of clause 1, further comprising a biasing mechanism configured to bias the protrusion into engagement with each of the plurality of indents.

Clause 9: The controller control stick of clause 8, wherein the biasing mechanism comprises a compression spring.

Clause 10: The controller control stick of clause 1, further comprising an attachment shaft configured to securely attach the control stick shaft to the control stick shell, wherein the control stick shaft has an annular cross-section configured to surround the attachment shaft, wherein the control stick shaft is configured to rotate around the attachment shaft.

Clause 11: The controller control stick of clause 1, further including a thumb pad fixedly attached to the end of the control stick shaft such that rotation of the thumb pad results in a corresponding rotation of the control stick shaft.

Clause 12: The controller control stick of clause 1, wherein the control stick shaft is rotatable in a first direction to move the control stick shaft from engagement with the first indent to engagement with the second indent, wherein the second indent is shaped to prevent further rotation in the first direction when the protrusion is engaged in the second indent.

Clause 13: A video game system controller comprising: a controller body; and a controller control stick movably coupled to the controller body, wherein the controller control stick is rotatable about a pivot center in the controller body, wherein the controller control stick includes: a control stick shaft; and a control stick shell, wherein the control stick shaft is rotatably positioned in a notch of the control stick shell, wherein an end of the control stick shaft extends above the control stick shell, wherein the control stick shaft includes a protrusion and the control stick shell includes a plurality of indents engageable by the protrusion to position the end of the control stick shaft at different heights with respect to the controller body, wherein a first indent and a second indent of the plurality of indents are positioned such that rotation of the control stick shaft when the protrusion engages the first indent causes the protrusion to move into engagement with the second indent.

Clause 14: The video game system controller of clause 13, wherein the control stick shell is coupled to the controller body to hold the control stick shell stationary while the control stick shaft rotates in the control stick shell.

Clause 15: The video game system controller of clause 14, wherein the control stick shell is coupled to a control stick axis analog sensor module in the controller body, wherein the sensor module defines the pivot center.

Clause 16: The video game system controller of clause 13, wherein engagement of the protrusion and the first indent positions the end of the control stick shaft at a first height, wherein engagement of the protrusion and the second indent positions the end of the control stick shaft at a second height that is different from the first height.

Clause 17: The video game system controller of clause 13, further comprising a second controller control stick movably coupled to the controller body, wherein the second controller control stick is rotatable above a second pivot center in the controller body.

Clause 18: The video game system controller of clause 17, wherein the second controller control stick includes: a second control stick shaft; and a second control stick shell, wherein the second control stick shaft is rotatably positioned in a second notch of the second control stick shell, wherein an end of the second control stick shaft extends above the control stick shell, wherein the second control stick shaft includes a second protrusion and the control stick shell includes a plurality of indents engageable by the second protrusion to position the end of the second control stick shaft at different heights with respect to the controller body, wherein a third indent and a fourth indent of the plurality of indents are positioned such that rotation of the second control stick shaft when the second protrusion engages the third indent causes the protrusion to move into engagement with the fourth indent.

Clause 19: A video game system controller control stick comprising: a control stick shaft; and a control stick shell, wherein the control stick shaft is rotatably positioned in a notch of the control stick shell, wherein an end of the control stick shaft extends above the control stick shell, wherein the control stick shaft includes a protrusion and the control stick shell includes a plurality of indents engageable by the protrusion to position the end of the control stick shaft at different heights with respect to the control stick shell, wherein engagement of the protrusion and a first indent of the plurality of indents positions the end of the control stick shaft at a first height, wherein engagement of the protrusion and a second indent of the plurality of indents positions the end of the control stick shaft at a second height that is different from the first height, wherein engagement of the protrusion and a third indent of the plurality of indents positions the end of the control stick shaft at a third height that is different from the first height and the second height, wherein the first indent and the second indent are positioned such that rotation of the control stick shaft in a first direction when the protrusion engages the first indent causes the protrusion to move into engagement with the second indent, wherein the second indent and the third indent are positioned such that rotation of the control stick shaft in the first direction when the protrusion engages the second indent causes the protrusion to move into engagement with the third indent, and wherein the third indent and the first indent are positioned such that rotation of the control stick shaft in the first direction when the protrusion engages the third indent causes the protrusion to move into engagement with the first indent.

Clause 20: The video game system controller of clause 19, further comprising a biasing mechanism configured to bias the control stick handle toward the first height or the second height to overcomably resist the rotation of the at least the portion in the first direction or a second direction.

Clause 21: A video game system controller comprising: a controller body; and a controller control stick movably coupled to the controller body and having a handle, wherein the controller control stick or the handle is rotatable relative to the controller body and rotating the controller control stick or the handle causes height of the handle to change with respect to the controller body.

Clause 22: The video game system controller of clause 21, wherein the controller control stick or the handle is rotatable 360-degrees with respect to the controller body.

Clause 23: The video game system controller of clause 21, wherein the controller control stick or the handle is rotatable in a first direction to change the height of the handle from a most retracted position to an intermediate position to a most extended position.

Clause 24: The video game system controller of clause 21, wherein the controller control stick or the handle is rotatable in a first direction to change the height of the handle from a most retracted position to an intermediate position to a most extended position to the most retracted position.

Clause 25: The video game system controller of clause 21, wherein the controller control stick or the handle is rotatable in a first direction to change the height of the handle from a most extended position to a most retracted position.

Clause 26: The video game system controller of clause 21, wherein the controller control stick or the handle is rotatable in a first direction and a second direction opposite the first direction to change the height of the handle with respect to the controller body.

Clause 27: The video game system controller of clause 21, wherein the controller control stick or the handle is rotatable in a first direction to increase the height of the handle with respect to the controller body and in a second direction opposite the first direction to decrease the height of the handle with respect to the controller body.

Clause 28: The video game system controller of clause 21, wherein the controller control stick or the handle is rotatable in a first direction to increase the height of the handle with respect to the controller body and further rotation in the first direction causes the height of the handle to decrease with respect to the controller body.

## Claims

1. A video game system controller comprising:
a controller body; and
a controller control stick (1002) movably coupled to the controller body and having a handle (116; 1102), wherein the controller control stick (1002) or the handle (116; 1102) is rotatable relative to the controller body and rotating the controller control stick (1002) or the handle (116; 1102) causes height of the handle (116; 1102) to change with respect to the controller body.

2. The video game system controller of claim 1, wherein the controller control stick (1002) or the handle (116; 1102) is rotatable 360-degrees with respect to the controller body.

3. The video game system controller of any preceding claim, wherein the controller control stick (1002) or the handle (116; 1102) is rotatable in a first direction to change the height of the handle (116; 1102) from a most retracted position (700; 1700) to an intermediate position (800; 1800) to a most extended position (900; 1900).

4. The video game system controller of any preceding claim, wherein the controller control stick (1002) or the handle (116; 1102) is rotatable in a first direction to change the height of the handle (116; 1102) from a most retracted position (700; 1700) to an intermediate position (800; 1800) to a most extended position (900; 1900) to the most retracted position (700; 1700).

5. The video game system controller of any preceding claim, wherein the controller control stick (1002) or the handle (116; 1102) is rotatable in a first direction to change the height of the handle (116; 1102) from a most extended position (900; 1900) to a most retracted position (700; 1700).

6. The video game system controller of any preceding claim, wherein the controller control stick (1002) or the handle (116; 1102) is rotatable in a first direction and a second direction opposite the first direction to change the height of the handle (116; 1102) with respect to the controller body.

7. The video game system controller of any preceding claim, wherein the controller control stick (1002) or the handle (116; 1102) is rotatable in a first direction to increase the height of the handle (116; 1102) with respect to the controller body and in a second direction opposite the first direction to decrease the height of the handle (116; 1102) with respect to the controller body.

8. The video game system controller of any preceding claim, wherein the controller control stick (1002) or the handle (116; 1102) is rotatable in a first direction to increase the height of the handle (116; 1102) with respect to the controller body and further rotation in the first direction causes the height of the handle (116; 1102) to decrease with respect to the controller body.

9. The video game system controller of any preceding claim, wherein the controller control stick (1002) is rotatable about a pivot center in the controller body, wherein the controller control stick (1002) includes: a control stick shaft (104; 1108); and a control stick shell (102; 1104), wherein the control stick shaft (104; 1108) is rotatably positioned in a notch (306; 1606) of the control stick shell (102; 1104), wherein an end of the control stick shaft (104; 1108) extends above the control stick shell (102; 1104), wherein the control stick shaft (104; 1108) includes a protrusion (206; 400; 1208; 1400) and the control stick shell (102; 1104) includes a plurality of indents (200-204; 1200-1204) engageable by the protrusion (206; 400; 1208; 1400) to position the end of the control stick shaft (104; 1108) at different heights with respect to the controller body, wherein a first indent (200; 1200) and a second indent (202; 1202) of the plurality of indents (200-204; 1200-1204) are positioned such that rotation of the control stick shaft (104; 1108) when the protrusion (206; 400; 1208; 1400) engages the first indent (200; 1200) causes the protrusion (206; 400; 1208; 1400) to move into engagement with the second indent (202; 1202).

10. The video game system controller of claim 9, wherein the control stick shell (102; 1104) is coupled to the controller body to hold the control stick shell (102; 1104) stationary while the control stick shaft (104; 1108) rotates in the control stick shell (102; 1104).

11. The video game system controller of claim 10, wherein the control stick shell (102; 1104) is coupled to a control stick axis analog sensor module (112; 1116) in the controller body, wherein the sensor module (112; 1116) defines the pivot center.

12. The video game system controller of any of claims 9-11, wherein engagement of the protrusion (206; 400; 1208; 1400) and the first indent (200; 1200) positions the end of the control stick shaft (104; 1108) at a first height, wherein engagement of the protrusion (206; 400; 1208; 1400) and the second indent (202; 1202) positions the end of the control stick shaft (104; 1108) at a second height that is different from the first height.

13. The video game system controller of any of claims 9-12, further comprising a second controller control stick (904; 1004) movably coupled to the controller body, wherein the second controller control stick (904; 1004) is rotatable above a second pivot center in the controller body.

14. The video game system controller of claim 13, wherein the second controller control stick (904; 1004) includes: a second control stick shaft (104; 1108); and a second control stick shell, wherein the second control stick shaft is rotatably positioned in a second notch of the second control stick shell, wherein an end of the second control stick shaft extends above the control stick shell, wherein the second control stick shaft includes a second protrusion and the control stick shell includes a plurality of indents engageable by the second protrusion to position the end of the second control stick shaft at different heights with respect to the controller body, wherein a third indent and a fourth indent of the plurality of indents are positioned such that rotation of the second control stick shaft when the second protrusion engages the third indent causes the protrusion to move into engagement with the fourth indent.

15. The video game system controller of any of claims 9-14, wherein the control stick shaft (104; 1108) is rotatable in a first direction to move the control stick shaft (104; 1108) from engagement with the first indent (200; 1200) to engagement with the second indent (202; 1202), wherein the control stick shaft (104; 1108) is rotatable in a second direction to move the control stick shaft (104; 1108) from engagement with the second indent (202; 1202) to engagement with the first indent (200; 1200), wherein the second direction is opposite the first direction.
